# FASCICULE DE BREVET EUROPEEN

(11) **EP 1 190 754 B1**
(45) Date de publication et mention de la délivrance du brevet: **10.02.2010**
(21) Numéro de dépôt: 01402261.0
(22) Date de dépôt: 30.08.2001
(51) Int. Cl.: B01D 17/04, C10G 33/04

(54) **Formulation désémulsionnante en base huile et son utilisation dans le traitement des drains forés en boue à l'huile**
Demulgierende Zusammensetzung basierend auf Öl und ihre Verwendung bei der Behandlung von Ölschlamm enthaltenden Bohrlöchern
Demulsifying formulation based on oil and use thereof for the treatment of oil drill drains containing oil slurry

(30) Priorité: 15.09.2000 FR 0011842
(43) Date de publication de la demande: 27.03.2002
(73) Titulaire: Institut Français du Pétrole, 92852 Rueil-Malmaison Cedex (FR)
(72) Inventeur: Giard-Blanchard, Claire, 75015 Paris (FR); Audibert-Hayet, Annie, 78290 Croissy sur Seine (FR); Dalmazzone, Christine, 78000 Versailles (FR)

(56) Documents cités:
- WO-A-00/06677
- GB-A- 1 524 448
- US-A- 5 256 305

## Description

### Domaine de l'invention

L'invention concerne le traitement des drains forés en boue à l'huile.

Elle concerne plus particulièrement une formulation désémulsionnante en base huile, utilisable dans le traitement des drains forés en boue à l'huile, de préférence non éco-toxique et compatible au mieux avec les fluides de formation, qui comprend un système tensioactif employé en base huile afin de limiter au maximum les phénomènes de formation d'émulsions in situ et de re-saturation en phase aqueuse des abords du puits.

### Arrière-plan technologique

Une formation pétrolière est endommagée lorsqu'un puits se montre moins productif que ne le prévoyaient les analyses des tests de puits. Les mécanismes d'endommagement de la formation dépendent du type de réactions produites entre le fluide de puits, les fluides de la formation et la roche, dans les conditions de travail (pression et température de la couche et de la boue). L'altération de la formation productrice proche du puits est due aux interactions néfastes entre les fluides de formation et les fluides étrangers introduits. Si les fluides de puits s'avèrent responsables de l'endommagement, un traitement chimique est alors nécessaire pour restaurer les caractéristiques du réservoir. Il doit permettre de détruire le cake externe et/ou interne et de nettoyer la zone endommagée aux abords du puits. Ce traitement peut être ou non associé à un traitement matriciel de type acide.

En règle générale, les fluides de puits à base d'huile génèrent peu de filtrat, possèdent de bonnes propriétés rhéologiques et forment un cake mince et perméable. En revanche, ils contiennent des additifs chimiques (tensioactifs) chargés d'émulsionner l'eau sous forme de gouttelettes au sein de la phase continue à base d'huile et de rendre mouillables à l'huile les particules solides utilisées comme alourdissant ou viscosifiant. Ces tensioactifs en large excès de concentration dans le fluide pour maintenir la stabilité de l'émulsion inverse peuvent pénétrer dans la formation avec le filtrat.

Trois types d'endommagement sont particulièrement envisageables dans le cas des fluides à base d'huile :
- la formation d'une émulsion au sein du réservoir, résultant des interactions entre le filtrat de la boue à l'huile (qui contient principalement de l'huile et des tensioactifs) et les fluides de réservoir (saumure et huile). Les émulsifiants introduits en excès dans la formulation peuvent entrer en contact avec la formation. Or, un important cisaillement à la constriction des pores en présence d'émulsifiant peut conduire à la formation d'une émulsion très stable et très visqueuse entraînant une réduction de la mobilité effective des hydrocarbures présents ;
- une altération de la mouillabilité initiale de la roche réservoir. Les produits de type émulsifiant transforment généralement la roche initialement mouillable à l'eau en un état de mouillabilité intermédiaire, voire mouillable à l'huile, ce qui peut entraîner une modification de la perméabilité relative à l'huile et donc diminuer la mobilité de l'huile ; et
- le dépôt de fines particules mobiles dans les pores (réduction de la perméabilité absolue).

La composition chimique du cake de filtration doit être considérée attentivement lors de la conception des fluides de traitement. Le cake est principalement constitué de gouttelettes d'eau émulsionnées, qui agissent en tant que particules colloïdales et se combinent avec les particules solides en suspension dans le fluide pour former un cake. La stabilité de l'émulsion, le type et la nature des solides influencent à la fois les pertes de fluide et les propriétés de filtration du cake. Le choix du produit de traitement doit prendre en compte les paramètres nécessaires pour réaliser le lavage du cake et le lessivage de la formation.

Le traitement envisagé concerne :
- la dissolution des agents alourdissants présents dans le cake et
- l'attaque des additifs contenus dans le filtrat.

Le traitement doit donc être adapté au type de boue utilisé. Les principaux paramètres à considérer sont :
- le type d'endommagement et son étendue ;
- les caractéristiques du réservoir (porosité et perméabilité) ;
- le type de la formation (nature des roches et solubilité à l'acide) ;
- les contaminants possibles (eau, boues - boue à l'eau et boue à l'huile -, ciments, bactéries) ;
- la compatibilité du fluide de traitement avec les contaminants ;
- la pression de fond et la température ;
- le temps de traitement ; et
- les limitations physiques des équipements du puits.

L'amélioration du design d'un fluide de forage visant à réduire l'endommagement peut être complètement ruinée par l'utilisation d'une procédure et/ou d'un produit de nettoyage inadaptés. Les solutions de traitement des cakes de boues à l'huile proposées actuellement sont sous forme aqueuse et génèrent un endommagement additionnel considérable, voire entraînent un colmatage du puits. De nombreux exemples de traitement des drains à l'aide de surfactants utilisés en phase aqueuse peuvent être trouvés dans la littérature (brevets US-A-4 681 165, 4 595 511, 4 681 164 et 5 110 487). L'utilisation de surfactants en base huile pour le cassage d'émulsions a été reportée (brevets US-A-5 614 101, 5 256 305 et 4 416 754), mais l'objectif n'est pas l'application à la mise en production pétrolière.

### Résumé de l'invention

La présente invention a pour objet une formulation désémulsionnante utilisée en base huile (de préférence dans une base organique non polluante et qui peut être l'huile de la boue elle-même), ladite formulation désémulsionnante étant capable de casser une émulsion eau-dans-huile. L'invention a également pour objet l'utilisation d'une telle formulation dans le traitement des drains forés en boue à l'huile. La simplification de la solution de traitement permet de limiter les effets de re-saturation en phase aqueuse aux abords du puits et la formation d'émulsions in situ.

### Description détaillée de l'invention

L'invention fournit des formulations désémulsionnantes en base huile selon la revendication 1. Elles comprennent au moins un agent mouillant, au moins un désémulsionnant (ou "casseur d'émulsion") et au moins un solvant, l'ensemble étant en mélange dans une base organique.

Plus particulièrement dans les formulations de l'invention, ledit agent mouillant est présent en une proportion de 15 à 50 % en poids de tensioactif pur ; ledit agent désémulsionnant en une proportion de 0,5 à 20 % en poids de tensioactif pur ; et ledit solvant en une proportion de 40 à 85 % en poids ; l'ensemble ayant une concentration en matières tensioactives pures de 0,005 à 20 g, de préférence de 0,01 à 10 g, pour 100 ml de ladite base organique.

L'agent mouillant peut être choisi plus particulièrement parmi les tensioactifs anioniques tels que les dialkyl sulfosuccinates de sodium, par exemple le dioctyl sulfosuccinate de sodium.

L'agent désémulsionnant (ou "casseur d'émulsion") est un composé tensioactif non-ionique ou cationique, qui peut être choisi plus particulièrement parmi les copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, les esters alkyliques d'acides gras ou d'huiles naturelles, éventuellement alcoxylés ou polyalcoxylés, et les dérivés siliconés, tels que les polysiloxanes.

Le solvant peut être une base organique quelconque, choisie plus particulièrement parmi les coupes pétrolières telles que les kérosènes, les alcools et les mélanges hydro-alcooliques, ainsi que certaines huiles.

La base dans laquelle est utilisée la composition définie ci-dessus est en général une huile minérale ou une huile d'origine végétale, de préférence non polluante. Comme exemples d'huiles d'origine végétale, on peut citer les mélanges d'esters alkyliques d'huiles végétales, tels que les mélanges d'esters méthyliques de l'huile de colza.

Lorsque la base organique est une huile, il peut s'agir de la même huile que celle de la boue. Dans ce cas, on peut utiliser par exemple une huile minérale, comme l'huile HDF 2000® ou l'huile EDC 95® (vendues par la société Total Solvant), ou encore une huile végétale, comme l'huile BDMF® (mélange d'esters méthyliques d'huile de colza vendu par la société TotalFina Oléochimie).

Dans une variante, la base organique telle que définie ci-dessus peut elle-même servir de solvant aux tensioactifs (agent mouillant et /ou désémulsionnant) des formulations considérées dans l'invention.

Les formulations de traitement selon l'invention sont choisies corrélativement à la formulation de boue de façon à être compatible avec les systèmes émulsifiants et agents mouillants généralement utilisés pour disperser les solides dans la boue. Les formulations désémulsionnantes selon l'invention répondent à des critères de sélection qui peuvent être vérifiés en mettant en oeuvre les déterminations suivantes :
- étude des propriétés physico-chimiques du produit de traitement (c'est-à-dire la formulation désémulsionnante diluée dans la base organique) ;
- caractérisation de l'action de déstructuration du cake : en cristallisoir, en cellule de filtration statique, en cellule de filtration dynamique, et sur carotte de grès par la technique de "Differential Scanning Calorimetry" (DSC) et la cryomicroscopie ;
- compatibilité des fluides de formation (huile et saumure), de traitement (formulation désémulsionnante en base huile) et de forage (filtrat de la boue de forage à base huile) : étude de la formation des émulsions in situ.

L'aptitude d'une formulation désémulsionnante à être utilisée selon l'invention est principalement vérifiée par la technique de DSC. Cette technique est décrite en détail dans Dalmazzone, C., Clausse, D. Microcalorimetry, 1999. La technique est mise en oeuvre sur des échantillons de cake avant et après traitement pour évaluer le cassage de l'émulsion au sein du cake.

La technique thermique DSC est généralement utilisée pour déterminer la composition des émulsions eau-dans-huile, car elle permet de distinguer l'eau libre de l'eau émulsifiée (l'eau libre cristallise à des températures beaucoup plus élevées que les gouttelettes d'eau en émulsion). Cette technique est fondée sur les propriétés de solidification et de fusion des gouttelettes et du milieu dans lequel elles sont dispersées. Les informations obtenues concernent :
- le type d'émulsion : simple (eau-dans-huile ou huile-dans-eau) ou multiple (eau-dans-huile-dans-eau ou huile-dans-eau-dans-huile) ;
- la quantité de liquide et son état : liée ou dispersée ou libre ;
- les compositions des phases libres et dispersées ;
- le diamètre moyen des gouttelettes et leur évolution en fonction du temps due à la coalescence ou au mûrissement d'Ostwald ;
- les transferts de matière entre gouttelettes dus à leur différence de composition.

Les conditions à remplir pour le système désémulsionnant sont :
- compatibilité du filtrat de boue à l'huile, des fluides de réservoir et du fluide de traitement. La proportion de chaque phase varie pour pouvoir déterminer la formation d'émulsions sous forme de diagramme ternaire. La formation d'émulsion est caractérisée par des tests de type « Bottle Test » dans un premier temps, puis de manière plus quantitative par un suivi dans le temps à l'aide du Turbiscan® (spectro-rétrodiffusiomètre à infrarouge commercialisé par Formul'Action). Différents paramètres pourront être étudiés : influence de la température, de l'énergie de mélange.
- déstructuration des cakes obtenus en tests API par cassage de l'émulsion. La déstructuration des cakes est évaluée par l'analyse des courbes de DSC et par cryomicroscopie.

### Exemples

Les exemples suivants illustrent l'invention sans en limiter la portée.

Dans ces exemples on a testé les formulations suivantes :
Formulation 1 :
   - agent mouillant : 25 % en poids d'Aérosol OTS® (70 % en poids de dioctyl sulfosuccinate de sodium dans une coupe pétrolière) et 20 % en poids de Celanol DOS® (65 % en poids de dioctyl sulfosuccinate de sodium dans un mélange hydroalcoolique) ;
   - désémulsionnant : 5 % en poids de Pluriol® (polyéthylène glycol 100) ;
   - diluant : 50 % en poids de P220S ® (Ketrul 210 : kérosène).
   Cette formulation contient donc 30,5 % en poids d'agent mouillant pur, 5 % en poids de désémulsionnant pur et, en tout, 64,5 % en poids de solvants.
Formulation 2 :
   - agent mouillant : 20 % en poids d'Aérosol OTS® (70 % en poids de dioctyl sulfosuccinate de sodium dans une coupe pétrolière) et 20 % en poids de Celanol DOS® (65 % en poids de dioctyl sulfosuccinate de sodium dans un mélange hydroalcoolique) ;
   - désémulsionnant : 25 % en poids de TP 360® (20% en poids de copolymère de polyalkylèneoxydiméthylsiloxane dans du 2-éthyl-1-hexanol) ;
   - diluant : 35 % en poids de P220S ® (Ketrul 210 : kérosène).
   Cette formulation contient donc 27 % en poids d'agent mouillant pur, 5 % en poids de désémulsionnant pur et, en tout, 68 % en poids de solvants.

### Exemple 1 : Test de déstructuration des cakes en cristallisoir

Les aspects cinétiques de la déstructuration des cakes et l'influence de la température ont été étudiés sur trois formulations commerciales de boues à base d'huile.

Principe : La boue à base d'huile est filtrée sur papier filtre en cellule de filtration statique selon la procédure API à une température de 80 °C et sous une différence de pression de 35 bars pendant une heure. Des morceaux du cake obtenu sont placés dans des cristallisoirs en contact avec 20 ml de solution de traitement à 1 g/100 ml dans l'huile de la boue pendant des temps variables à température ambiante et à 80 °C. Le cassage de l'émulsion au sein du cake est évalué grâce à la technique de DSC.

Des morceaux du papier filtre supportant le cake sont découpés au scalpel. La masse des échantillons est d'environ 10 mg, pesés précisément. L'échantillon est placé à l'aide de pinces dans une capsule en aluminium. Un soin particulier est pris lors de la manipulation de l'échantillon (découpage avec le papier filtre, introduction dans la capsule) pour éviter d'endommager le cake mécaniquement.

La cellule est ensuite introduite dans le four de l'appareil de DSC aux côtés d'une cellule vide de référence. La cellule subit alors un cycle de refroidissement - chauffage de 20 °C à -120 °C. On enregistre le flux de chaleur Q (en W/g) en fonction de la température T (en °C). Un étalonnage est réalisé au préalable avec une cellule contenant de la saumure à la même concentration en CaCl₂ que la boue. La présence d'eau dans l'échantillon est détectée par les pics de cristallisation de la saumure.

Qualitativement, la température correspondant aux pics permet d'évaluer l'état de l'eau dans l'échantillon, l'eau libre cristallisant à des températures supérieures à l'eau émulsionnée. D'autre part, la forme du pic permet de statuer sur le caractère polydisperse (pic irrégulier ou présentant un épaulement) ou monodisperse (pic régulier et effilé) de l'émulsion au sein du cake, ce qui donne une information sur sa stabilité.

D'un point de vue quantitatif, la position des pics permet d'évaluer la finesse de l'émulsion (les gouttelettes ont un diamètre d'autant plus faible que la température de cristallisation est basse). De plus, la taille des pics permet d'accéder à la masse d'eau présente dans l'échantillon.

**Tableau 1 : Systèmes boues utilisés**

| | Formulation A* | Formulation B | Formulation C |
|---|---|---|---|
| Huile de base | Huile minérale | Ester de colza | Huile minérale |
| | HDF 2000® | BDMF® | EDC 95® |
| Saumure | Eau à 24 % en poids de CaCl₂ | Eau à 20 % en poids de NaCl | Eau à 24 % en poids de CaCl₂ |

| | | | |
|---|---|---|---|
| * La formulation A est la formulation BAROID 80-20® | | | |

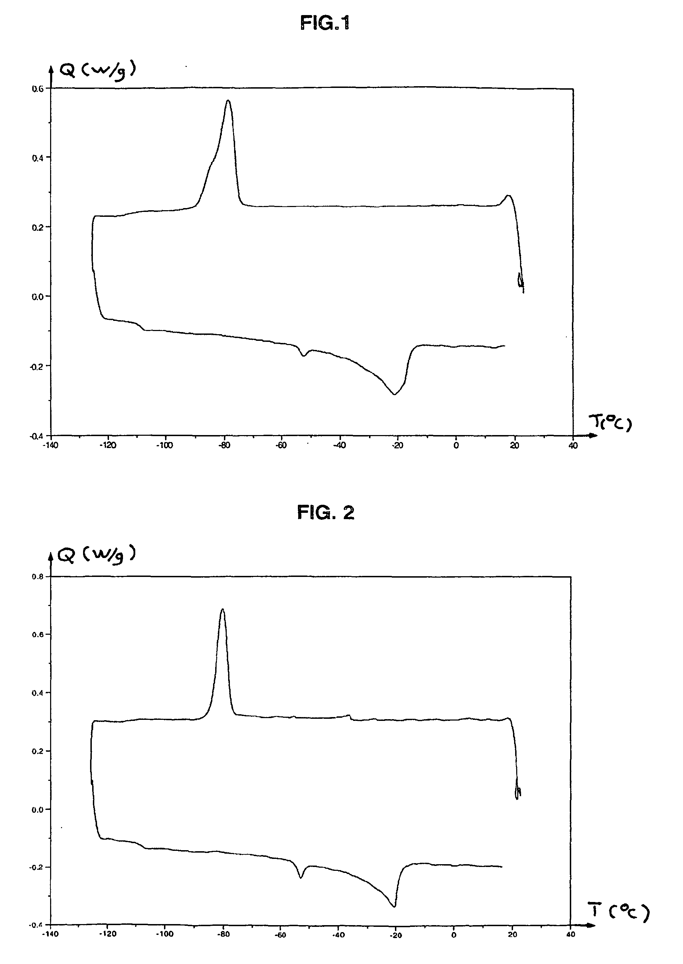

Résultats : D'un point de vue qualitatif, à température ambiante, même à de faibles temps de contact, on observe une évolution de la qualité de l'émulsion. Le pic d'eau émulsionnée (-80 °C) s'élargit à la base et présente un épaulement, ce qui traduit la polydispersité de l'émulsion (cf. Figure 1 : Analyse en DSC du cake BAROID traité en cristallisoir (24 h) par la formulation désémulsionnante 1 à 1 g/100 ml).

Après des temps de contact plus longs, on note l'apparition d'un pic d'eau libre aux alentours de -40 °C (l'eau libre cristallise à des températures plus élevées que l'eau émulsionnée). La présence d'eau libre au sein du cake indique le cassage de l'émulsion, donc la déstructuration du cake (cf. Figure 2 : Analyse en DSC du cake BAROID traité en cristallisoir (168 h) par la formulation désémulsionnante 1 à 1 g/100 ml).

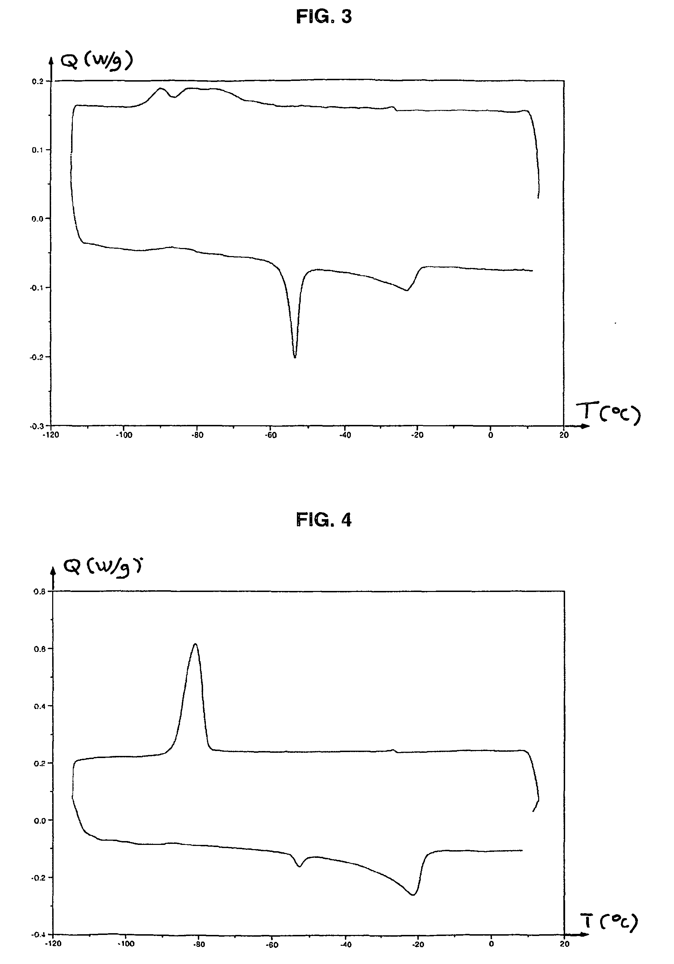

L'effet de la formulation désémulsionnante 1 sur les Formulations B et C de cakes a été mis en évidence à 80 °C pour les mêmes temps de contact : l'augmentation de température semble favoriser le cassage de l'émulsion. La polydispersité de l'émulsion est remarquée dès les faibles temps de contact et le pic d'eau libre apparaît pour des temps plus courts. (cf. Figures 3 et 4 : Analyse en DSC des cakes B et C traités par la formulation désémulsionnante 1 à 80 °C pendant 2 heures).

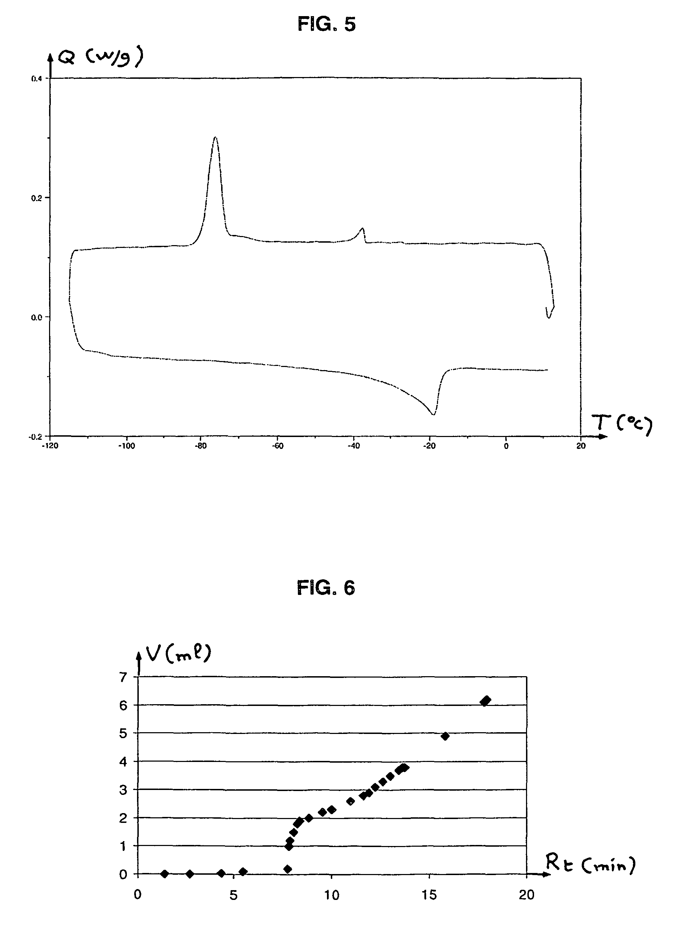

Le même type d'essai a été conduit sur le cake BAROID avec la formulation désémulsionnante 2. La caractérisation du cassage de l'émulsion en DSC montre l'apparition d'un pic d'eau libre (-28°C) après 48 h de temps de contact cake - désémulsionnant (cf. Figure 5 : Analyse en DSC du cake BAROID traité en cristallisoir (48 h) par la formulation désémulsionnante 2 à 1 g/100 ml).

### Exemple 2 : Filtration statique

La formulation de boue A (BAROID) est filtrée selon la procédure API (norme API 13) à une température de 80 °C et sous une différence de pression de 35 pars. Après filtration de 300 ml de boue pendant une heure, la cellule est dépressurisée, vidée de la boue, rincée avec 200 ml de solution de traitement, puis remplie avec 300 ml de solution de traitement à 1 g/100 ml en formulation désémulsionnante 1. Le cake à l'intérieur de la cellule est laissé en contact avec la solution de traitement pendant une demi-heure à pression atmosphérique et à 80 °C ("soaking time"), puis une surpression de 10 bars est appliquée pour permettre une nouvelle filtration. On observe un filtrat diphasique après 10 minutes de filtration.

Le cassage de l'émulsion est d'autre part corrélé à la rupture de pente de la courbe de filtration, qui apparaît aux environs de 10 minutes également (cf. Figure 6 : Filtration statique HP-HT de la boue A suivie d'une filtration à 80°C sous 10 bars) de la formulation désémulsionnante 1 à 1 g/100 ml après un temps de contact d'une demi-heure. Sur la Figure 6, on a porté le volume V en ml en fonction de la racine du temps en minutes Rₜ).

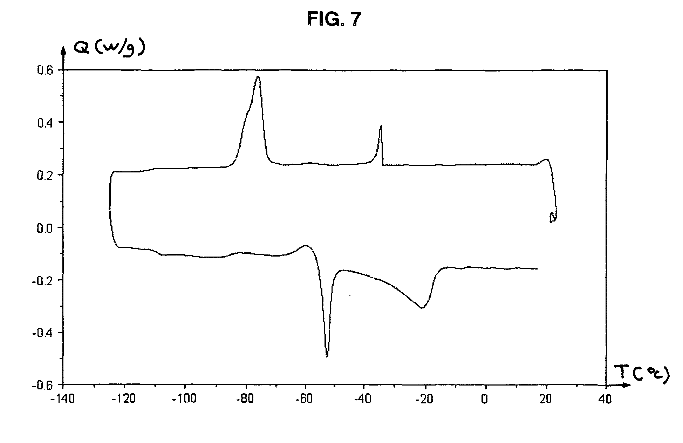

Un échantillon du cake traité est analysé par la technique de DSC comme précédemment. Le cassage de l'émulsion au sein du cake est confirmé par le cycle de refroidissement - chauffage obtenu en DSC. Un pic net apparaît aux alentours de -40 °C, il s'agit de l'eau libre issue du cassage de l'émulsion (cf. Figure 7 : Analyse en DSC du cake BAROID traité en filtration statique par la formulation désémulsionnante 1 à 1 g/100 ml d'huile). L'eau émulsionnée est donnée par le pic vers -80 °C.

Le même type d'essai a été mené avec un produit de traitement contenant 6 % en poids du produit commercial DM1® (fourni par la société BAROID) en solution dans 64 % en poids d'huile de base HDF 2000® et 30 % en poids d'un solvant aromatique PARAGON®. Les résultats matérialisés par la courbe de drainage en fonction du temps montrent une pente de filtration faible et ne révèlent pas de rupture de pente, même après douze heures de filtration. On ne peut donc pas déterminer de temps critique (Tableau 2).

**Tableau 2 : Traitement du cake en filtration statique par un produit commercial en phase huile**

| Filtrat après 12 h | Pente | Temps critique |
|---|---|---|
| (cm³) | (cm³/min) | (min) |
| 4,1 | 0,007 | - |

### Exemple 3 : Compatibilité

Dans l'optique d'éviter un endommagement additionnel de la formation à la paroi, il convient de contrôler la formation ou non d'émulsions in situ en choisissant un fluide de traitement compatible avec les fluides de réservoir (saumure et huile) et le filtrat de la boue.

Dans cet exemple, on met en contact la saumure (NaCl, 40 g/l) et une phase organique composée de l'huile de réservoir, du filtrat de la boue et du désémulsionnant.

Le filtrat est reconstitué à partir de l'huile de base et des tensioactifs de la boue. Dans la phase organique, les proportions de filtrat et d'huile de réservoir varient: 0-100, 25-75, 50-50, 75-25, 100-0 (proportions en volume). La formulation désémulsionnante 1 est ajoutée à raison de 1 g pour 100 ml.

La saumure est ajoutée progressivement à la phase organique, l'émulsion est agitée à 12 000 tr/min avec un agitateur Hamilton Beach commercial pendant 1 minute. La proportion de saumure dans le système varie de 10 à 90 % (10, 25, 50, 75 et 90 %).

La séparation de phase est observée visuellement sur une éprouvette graduée de 250 ml, puis au spectro-rétrodiffusiomètre à infrarouge (Turbiscan®).

Pour des ratios huile/filtrat inférieurs à 75/25, le mélange le plus défavorable (90 % saumure, 10 % huile) montre une séparation immédiate de la phase organique, visible au bout de quelques minutes, qui est confirmée par la mesure au Turbiscan®. Les émulsions à 75, 50, 25 et 10 % de saumure donnent également une séparation immédiate, visible au bout d'une demi-heure. Au bout de quelques heures, l'eau séparée est totalement limpide.

On assiste à la formation d'émulsion lorsque la proportion d'huile de formation est supérieure ou égale à 75 % de la phase organique et que le pourcentage de phase organique de l'émulsion est supérieur à 50 %, c'est-à-dire lors de situations peu envisageables. Dans ce cas, on assiste à un crémage de l'émulsion sans cassage immédiat.

### Exemple 4 : Filtration dynamique

L'essai de filtration dynamique sur carotte est effectué à l'aide du filtre presse dynamique développé à l'Institut Français du Pétrole (Li, Y. D., Rosenberg, E., Argillier, J. F. : "Static and Dynamic Filtration Properties of Aqueous Suspensions of Clays and Electrolytes." Revue de l'Institut Français du Pétrole, 52, 2, 207-218, 1996.).

La boue est introduite dans la cellule (V # 400 cm³), une géométrie cône-plan contrôle le taux de cisaillement variable de 0 à 1000 s⁻¹ et constant sur toute la surface de filtration pour une gamme de température de l'ambiante jusqu'à 100 °C. La pression différentielle entre le haut et le bas de la cellule est contrôlée par une surpression d'azote appliquée sur la boue.

L'appareil de filtration dynamique présente l'avantage d'être très souple vis-à-vis du milieu filtrant à mettre en jeu. Dans le cas de filtration sur milieu poreux, toute carotte taillée dans la roche sur un diamètre de 33 mm et une longueur de 70 mm peut convenir, elle est placée en conditions de saturation irréductible en eau. Le milieu filtrant est isolé dans une cellule elle-même isolée par une membrane Hassler. Cette membrane est utilisée dans le but de générer un écoulement longitudinal : sous l'effet d'une pression de sertissage la membrane adhère aux parois du milieu filtrant et limite les problèmes de diffusion radiale.

L'évolution du test est gérée manuellement grâce à la présence de manomètres qui permettent de contrôler les niveaux de pression. On applique la pression différentielle entre le haut et le bas de la cellule ; cette manoeuvre initialise le test de filtration dynamique. Les données (volume filtré en fonction du temps) sont alors traitées instantanément par ordinateur et l'on peut suivre le comportement de filtration du fluide en temps réel.

Des tests de filtration dynamique sont conduits sur carotte pour évaluer l'impact du produit de traitement sur la perméabilité durant l'invasion et lors de la mise en production. Une procédure standard est suivie :
- saturation initiale de la cellule (100 % saumure ou saturation résiduelle à l'eau et détermination de la perméabilité à la saumure ou à l'huile) ;
- invasion par le fluide de forage en conditions dynamiques ;
- mise en contact du produit de traitement sous une différence de pression contrôlée ;
- mesure de la pression de décollement du cake externe restant après le passage du produit de traitement et mesure de la perméabilité retour à l'huile.

Le test de filtration dynamique est conduit sur une carotte de grès Béréa.

L'échantillon est mesuré précisément (longueur, section, poids sec), puis saturé sous vide en saumure NaCl 40 g/l et KCl 5 g/l. La différence de poids à sec et saturé en saumure permet de calculer le volume de pores (V_{P}) et la porosité (Φ).

L'échantillon est ensuite placé dans une cellule Hassler verticale et balayé à la saumure sous une pression de pore de 10 bars afin d'éliminer toute trace de gaz dans le milieu poreux. La perméabilité de la roche gréseuse est de l'ordre de 0,6 Darcy.

Pour mesurer la perméabilité à la saumure (K_{w}), il suffit d'observer les profils de pression à différents débits et d'appliquer la loi de Darcy : dV/dt= K.(ΔP.A)/(η.L)
avec dV/dt le débit
K la perméabilité
ΔP la pression
A la surface
η la viscosité
L la longueur

La mise en place de la saturation irréductible en eau est réalisée par injection de Soltrol 130® (huile minérale) à différents débits. Le volume de saumure déplacé est récupéré dans une burette graduée. Le volume d'huile injecté correspond à 20 volumes de pores. La saturation irréductible en eau est atteinte dans le milieu poreux quand le volume de saumure déplacé est nul.

Pour la mesure de la perméabilité à l'huile (Kₒ) après saturation irréductible, la procédure est identique à la mesure de K_{w}.

Résultats : On observe que la formulation désémulsionnante testée est efficace en terme de déstructuration des cakes externes. Cependant, l'aspect déterminant, lors de sa mise en oeuvre sur champ, consiste à savoir si, en moyenne, il améliore les propriétés d'écoulement au voisinage immédiat des parois du drain.

La variation du volume filtré en fonction du temps présente successivement deux allures. Dans un premier temps, la déstructuration du cake externe se traduit par un débit filtré relativement faible, puis, dans un deuxième temps, l'envahissement de la formation par la solution de nettoyage se traduit par un débit filtré de plus en plus important.

Dans le cas présent, la perméabilité initiale à l'huile d'environ 567 mD, la perméabilité à la saumure est de 462 mD. Le temps de contact avec le produit de traitement est de 1 heure; la surpression est de 10 bars. La perméabilité retour après contact avec le produit de traitement est de 270 mD, soit environ 50 % de la perméabilité à l'huile initiale. Comparativement, sans traitement, la perméabilité retour est de l'ordre de 25 % de la perméabilité à l'huile initiale.

En outre, conformément aux études de compatibilité, on n'observe pas d'endommagement supplémentaire comme ce pourrait être le cas pour un fluide de traitement à base d'eau. En effet, dans les mêmes conditions, un traitement à base d'eau entraîne une perméabilité retour de 17 % de la perméabilité à l'huile initiale.

## Revendications

1. Formulation désémulsionnante en base huile **caractérisée en ce qu'**elle comprend au moins un agent mouillant choisi parmi les tensioactifs anioniques, au moins un désémulsionnant étant un tensioactif non-ionique ou cationique choisi parmi les copolymères d'oxyde d'éthylène et d'oxyde de propylène, les dérivés d'alcools ou de phénols à enchaînements alcoxylés ou polyalcoxylés, les polyalkylèneglycols, les polyamines, les dérivés alcoxylés ou polyalcoxylés d'amines, les sels d'ammonium quaternaires, les esters d'alcanolamines quaternisées, les esters alkyliques d'acides gras ou d'huiles naturelles, éventuellement alcoxylés ou polyalcoxylés, et les dérivés siliconés et au moins un solvant, l'ensemble étant en mélange dans une base organique.

2. Formulation selon la revendication 1 **caractérisée en ce que** :
- ledit agent mouillant est présent en une proportion de 15 à 50 % en poids de tensioactif pur ;
- ledit agent désémulsionnant est présent en une proportion de 0,5 à 20 % en poids de tensioactif pur ; et
- ledit solvant est présent en une proportion de 40 à 85 % en poids ;
- l'ensemble ayant une concentration en matières tensioactives pures de 0,005 à 20 g pour 100 ml de ladite base organique.

3. Formulation selon la revendication 2 **caractérisée en ce que** ledit agent mouillant est un dialkyl sulfosuccinate de sodium.

4. Formulation selon l'une des revendications 1 à 3 **caractérisée en ce que** ledit solvant est choisi parmi les coupes pétrolières, les alcools et les mélanges hydro-alcooliques.

5. Formulation selon l'une des revendications 1 à 4 **caractérisée en ce que** ladite base organique est une huile minérale ou une huile d'origine végétale.

6. Formulation selon la revendication 5 **caractérisée en ce que** ladite base organique est non polluante.

7. Formulation selon la revendication 5 **caractérisée en ce que** ladite huile d'origine végétale est un mélange d'esters méthyliques d'huile de colza.

8. Formulation selon la revendication 5 **caractérisée en ce que**, la formulation étant utilisée pour le traitement de drains forés en boue à l'huile, l'huile de ladite formulation est la même huile que celle de la boue.

9. Utilisation d'une formulation désémulsionnante en base huile selon l'une des revendications 1 à 8 dans le traitement d'un drain foré en boue à l'huile.

## Claims

1. Oil-based demulsifying formulation **characterized in that** it comprises at least one wetting agent chosen from the anionic surfactants, at least one demulsifier being a non ionic or cationic surfactant chosen from copolymers of ethylene oxide and propylene oxide, derivatives of alcohols or of phenols with alkoxylated or polyalkoxylated chain formations, polyalkyleneglycols, polyamines, alkoxylated or polyalkoxylated derivatives of amines, quaternary ammonium salts, quaternized alkanolamine esters, alkyl esters of fatty acids or natural oils, possibly alkoxylated or polyalkoxylated, and silicated derivatives and at least one solvent, the whole being a mixture in an organic base.

2. Formulation according to claim 1, **characterized in that**:
- said wetting agent is present in a proportion of 15 to 50% by weight of pure surfactant;
- said demulsifier is present in a proportion of 0.5 to 20% by weight of pure surfactant; and
- said solvent is present in a proportion of 40 to 85% by weight;
- the whole having a concentration of pure surfactant material of 0.005 to 20 g for 100 ml of said organic base.

3. Formulation according to claim 2 **characterized in that** said wetting agent is a sodium dialkyl sulphosuccinate.

4. Formulation according to one of claims 1 to 3 **characterized in that** said solvent is chosen from the petroleum fractions, alcohols and hydro-alcoholic mixtures.

5. Formulation according to one of claims 1 to 4 **characterized in that** said organic base is a mineral oil or an oil of vegetable origin.

6. Formulation according to claim 5 **characterized in that** said organic base is non polluting.

7. Formulation according to claim 5 **characterized in that** said oil of vegetable origin is a mixture of methyl esters of rapeseed oil.

8. Formulation according to claim 5 **characterized in that**, when the formulation is used for the treatment of drains drilled in oil-based mud, the oil of said formulation is the same as the oil in the mud.

9. Use of an oil-based demulsifying formulation according to one of claims 1 to 8 in the treatment of a drain drilled in oil-based mud.

## Patentansprüche

1. Entemulsionierende Formulierung auf Ölbasis, **dadurch gekennzeichnet, dass** sie mindestens ein Benetzungsmittel, ausgewählt aus den anionischen Tensiden, mindestens einen Entemulsionierer, der ein nicht-ionisches oder kationisches Tensid ist, ausgewählt aus den Ethylenoxid- und Propylenoxidcopolymeren, den Alkohol- oder den Phenolderivaten mit alkoxylierten oder polyalkoxylierten Ketten, den Polyalkylenglykolen, den Polyaminen, den alkoxylierten oder polyalkoxylierten Aminderivaten, den quarternären Ammoniumsalzen, den quarternisierten Alkanolaminestern, den Alkylestern von Fettsäuren oder natürlichen Ölen, die gegebenenfalls alkoxyliert oder polyalkoxyliert sind, und den silizierten Derivaten, und mindestens ein Lösemittel umfasst, wobei der Komplex in einer organischen Basis gemischt ist.

2. Formulierung nach Anspruch 1, **dadurch gekennzeichnet, dass**:
- das Benetzungsmittel in einem Anteil von 15 bis 50 Gew.-% an reinem Tensid vorhanden ist;
- der Entemlusionierer in einem Anteil von 0,5 bis 20 Gew.-% an reinem Tensid vorhanden ist; und
- das Lösemittel in einem Anteil von 40 bis 85 Gew.-% vorhanden ist;
- wobei der Komplex eine Konzentration an reinen Tensidsubstanzen von 0,005 bis 20 g je 100 ml der organischen Basis aufweist.

3. Formulierung nach Anspruch 2, **dadurch gekennzeichnet, dass** das Benetzungsmittel ein Natriumdialkylsulfosuccinat ist.

4. Formulierung nach einem der Ansprüche 1 bis 3, **dadurch gekennzeichnet, dass** das Lösemittel aus den Erdölschnitten, den Alkoholen und den alkoholisch-wässrigen Mischungen ausgewählt ist.

5. Formulierung nach einem der Ansprüche 1 bis 4, **dadurch gekennzeichnet, dass** die organische Basis eine Mineralöl oder ein Öl pflanzlichen Ursprungs ist.

6. Formulierung nach Anspruch 5, **dadurch gekennzeichnet, dass** die organische Basis umweltverträglich ist.

7. Formulierung nach Anspruch 5, **dadurch gekennzeichnet, dass** das Öl pflanzlichen Ursprungs eine Mischung aus Methylestern des Rapsöls ist.

8. Formulierung nach Anspruch 5, **dadurch gekennzeichnet, dass** die Formulierung für die Behandlung von Dränen verwendet wird, die in Ölschlamm gebohrt werden, wobei das Öl der Formulierung das gleiche Öl ist, wie das des Schlamms.

9. Verwendung der entemulsionierenden Formulierung auf Ölbasis nach einem der Ansprüche 1 bis 8 bei der Behandlung eines Dräns, der in Ölschlamm gebohrt wurde.
